# EUROPEAN PATENT SPECIFICATION

(11) **EP 4 090 177 B1**
(45) Date of publication and mention of the grant of the patent: **08.04.2026**
(21) Application number: 21703549.2
(22) Date of filing: 11.01.2021
(51) Int. Cl.: A24B 3/14, A24B 15/12, A24B 15/14

(54) **METHOD FOR MANUFACTURING RECONSTITUTED VEGETABLE AND/OR ALKALOID SUBSTANCES AND PLANT FOR IMPLEMENTING SAID METHOD.**
VERFAHREN ZUR HERSTELLUNG VON REKONSTITUIERTEN PFLANZLICHEN UND / ODER ALKALOIDALEN SUBSTANZEN UND ANLAGE ZUR UMSETZUNG DIESES VERFAHRENS
PROCÉDÉ DE FABRICATION DE SUBSTANCES VÉGÉTALES ET / OU ALCALOÏDES RECONSTITUÉES ET INSTALLATION DE MISE EN OEUVRE DUDIT PROCÉDÉ

(30) Priority: 16.01.2020 IT 202000000727; 01.09.2020 IT 202000020827
(43) Date of publication of application: 23.11.2022
(73) Proprietor: Körber Technologies S.p.A., 31038 Paese (TV) (IT)
(72) Inventor: BOTTACCO, Igor, 31038 Paese (TV) (IT); PAVANETTO, Jader, 31038 Paese (TV) (IT)
(74) Representative: Gonella, Mario
(86) International application number: PCT/IB2021/050155
(87) International publication number: WO 2021/144676

(56) References cited:
- WO-A1-2017/089589
- WO-A1-2019/129861
- DE-C1- 3 819 534
- GB-A- 2 201 080
- US-A- 3 894 544

## Description

### TECHNICAL FIELD OF THE INVENTION

The present invention relates to a method for the production of reconstituted vegetable substances and/or reconstituted alkaloid substances and to a plant implementing such method.

More in detail, the present invention relates to a method and plant for the production of a single vegetable substance, or a mixture of such substances, in reconstituted form, such as for example tobacco in sheet form for smoking articles, hemp for medical or pharmaceutical use, leaves of aromatic plants for food use, or for the production of reconstituted alkaloids, both in individual form and as a mixture of different alkaloids. The following description will make explicit reference, purely by way of example, to the production of reconstituted tobacco. However, the method and the plant according to the present invention can equally be used, in general, in the production of reconstituted vegetable substances and/or reconstituted alkaloid substances.

### STATE OF THE ART

As known, shredded tobacco for cigarettes is obtained by subjecting the tobacco leaves to several mechanical processes (for example threshing, shredding, sieving, drying, etc.), which unfortunately also produce a large amount of tobacco powders, obviously besides the normal waste products, such as for example, the rib and veins of the leaf and the pieces of foil that are too small.

Over the last few years, the tobacco industry has developed processes that allow to recycle powder tobacco and other processing waste, obtaining large sheets of reconstituted tobacco that are adapted to be shredded and mixed with normal tobacco shredded for cigarettes.

More recently, reconstituted tobacco sheets have been used in heat-not-burn electronic devices, which produce tobacco vapours without leading tobacco to combustion.

In other words, these electronic devices heat the reconstituted tobacco up to a temperature of about 350°C (a much lower temperature with respect to the combustion temperature normally reached by the tobacco in cigarettes and other conventional smoking products), so as to generate an aerosol (tobacco vapours) which contains nicotine, but it is devoid of combustion products which are known to be the most dangerous to the health of the smoker/user.

Clearly, the taste of the aerosol produced by heat-not-burn electronic devices depends on the composition of the reconstituted tobacco sheet present in the cartridge.

The industrial process currently most used to produce the reconstituted tobacco sheets, provides for mixing the powders obtained from grinding virgin tobacco and/or from other tobacco sources, such as for example by-products from tobacco processing and tobacco powders, so as to obtain a fine powder with a particle size generally smaller than 350 µm (micrometres), which is then mixed with a high amount of water and with a binder usually based on cellulose, so as to obtain a relatively viscous liquid, conventionally referred to as slurry, having a water percentage higher than 60% and generally comprised between 70% and 80%.

The slurry thus obtained is subsequently continuously cast/poured onto a moving conveyor belt, so as to form, on the upper face of the belt, a thin layer of material with a roughly constant thickness, which is then rapidly dried inside a long hot-air furnace, so as to obtain a continuous sheet of reconstituted tobacco in output, which can be subsequently wound to form a coil.

Clearly, the taste of the reconstituted tobacco vapours depends on the ratios between the various components forming the slurry. Thus, the slurry is produced according to a predetermined recipe, usually known to the producer only.

Unfortunately, while on the one hand the industrial process described above guarantees the stability and repeatability of the final product, a fundamental characteristic for use in heat-not-burn devices, on the other hand it is characterised by a very high consumption of water and energy. Consumption that is no longer acceptable nowadays.

In addition, the reconstituted tobacco sheets obtained using the process described above are relatively fragile and they have a reduced tensile strength, with all the problems that this entails during winding at the end of the drying furnace.

Experimental tests have actually shown that the vegetable fibres are distributed randomly in the reconstituted tobacco sheets produced using the method described above, and this impairs the mechanical strength of the sheet.

Document US3894544A discloses a method and a device for the production of tobacco structures with grinded tobacco materials, wherein the starting tobacco material is grinded by means of a grinding device, moistened with a liquid, kneaded in a mixing device to form a dough-like mass which is then shaped to form leaf-like structures, applied onto a transport belt and subsequently dried by means of a drying device.

Document WO2019129861 discloses a method for the production of a sheet including a homogenized material containing alkaloids, said method including the steps of forming a mixture comprising the material containing alkaloids, extruding the mixture, adding water to the extruded mixture to form a slurry, casting the slurry forming a sheet, winding and cutting said sheet.

### SUMMARY OF THE INVENTION

An object of the present invention is to provide an industrial process for the production of reconstituted vegetable substances and/or reconstituted alkaloid substances, such as for example reconstituted tobacco in sheet form, capable of overcoming the drawbacks listed above.

In accordance with these objectives, according to the present invention, there is provided a method for the production of reconstituted vegetable substances and/or reconstituted alkaloid substances, such as for example reconstituted tobacco, as defined in claim 1 and preferably, but not necessarily, in any one of the claims depending thereon.

According to the present invention, a plant for the production of reconstituted vegetable substances and/or reconstituted alkaloid substances, such as for example reconstituted tobacco, as defined in claim 13 and preferably but not necessarily, in any of the claims dependent thereon, is also provided.

### BRIEF DESCRIPTION OF THE FIGURES

The present invention will now be described with reference to the accompanying drawings, which illustrate a non-limiting embodiment thereof, wherein:
figure 1 illustrates - schematically and with parts removed for the sake of clarity - a plant for the production of reconstituted vegetable substances and/or reconstituted alkaloid substances, with particular reference to reconstituted tobacco, made according to the teachings of the present invention;
figure 2 is a schematic view of a first section of the plant for the production of reconstituted vegetable substances and/or reconstituted alkaloid substances illustrated in figure 1, with parts removed for the sake of clarity;
figure 3 is a schematic view of a second section of the plant for the production of reconstituted vegetable substances and/or reconstituted alkaloid substances illustrated in figure 1, with parts removed for the sake of clarity;
figure 4 is a perspective view of a third section of the plant for the production of reconstituted vegetable substances and/or reconstituted alkaloid substances illustrated in figure 1, with parts removed for the sake of clarity;
figure 5 shows a partially exploded lateral view of the machine illustrated in figure 4, with transparent parts and parts removed for the sake of clarity;
figure 6 is a lateral view of a fourth section of the plant for the production of reconstituted vegetable substances and/or reconstituted alkaloid substances illustrated in figure 1, with cross-sectional parts and removed for the sake of clarity; while
figure 7 is a lateral view of a fifth section of the plant for the production of reconstituted vegetable substances and/or reconstituted alkaloid substances illustrated in figure 1, with cross-sectional parts and parts removed for the sake of clarity.

### DETAILED DESCRIPTION OF THE INVENTION

The present invention relates to a method and plant for the production of a single vegetable substance, or a mixture of such substances, in reconstituted form, such as for example tobacco in sheet form for smoking articles, hemp for medical or pharmaceutical use, leaves of aromatic plants for food use, or for the production of reconstituted alkaloids, both in individual form and as a mixture of different alkaloids. In the following description, reference will be made in particular to the production of reconstituted tobacco. However, this reference should be understood as being provided purely by way of non-limiting example, given that the method and the plant according to the present invention can equally be used, in general, in the production of a single vegetable substance or a mixture of such substances, in reconstituted form, or for the production of reconstituted alkaloids, both in individual form or as a mixture of different alkaloids, as specified above.

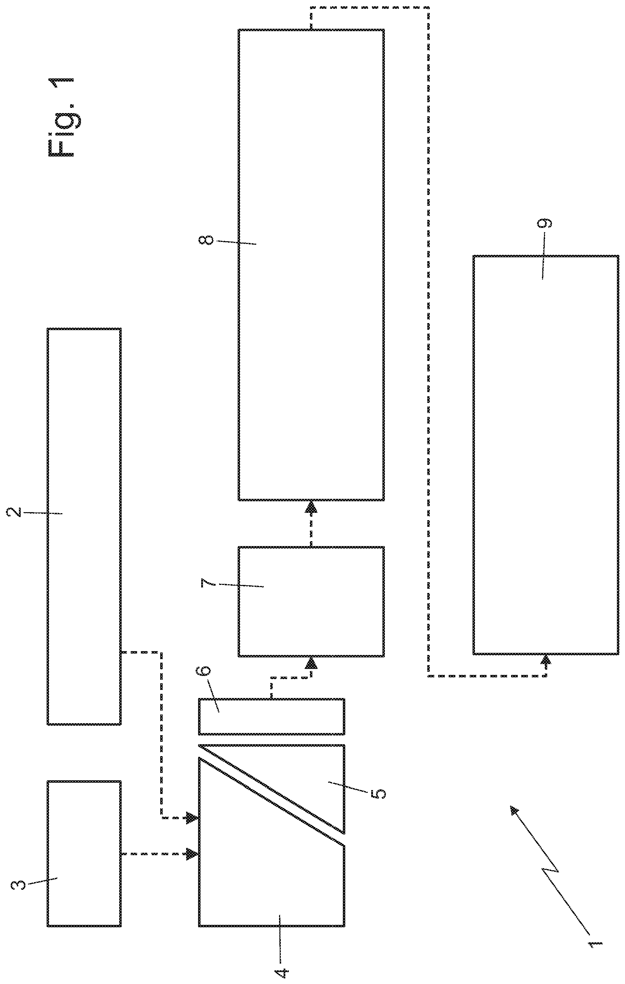

With reference to figure 1, a plant for the production of reconstituted vegetable substances and/or reconstituted alkaloid substances, with particular reference to reconstituted tobacco, which is adapted to continuously produce a sheet of a reconstituted vegetable substance and/or a reconstituted alkaloid of predetermined thickness, such as for example a reconstituted tobacco sheet of predetermined thickness, which can be subsequently cut into pieces, shredded or wound into coils, is indicated in its entirety with reference numeral 1.

In the illustrated example, in particular, the plant for the production of a reconstituted vegetable substance and/or a reconstituted alkaloid is preferably structured so as to output a succession of coils of said reconstituted vegetable substance and/or reconstituted alkaloid.

The method for the production of a reconstituted vegetable substance and/or a reconstituted alkaloid in sheet form firstly provides for the steps of separately producing a powdered material with a predetermined particle size and comprising powders of said reconstituted vegetable substance and/or reconstituted alkaloid preferably mixed with vegetable fibres, and a high viscosity and water-based humectant gel.

In other words, the humectant gel comprises water and one or more binding/thickening agents. The percentage of binding/thickening agents is clearly lower than the percentage of water.

Furthermore, the powdered material based on vegetable substance and/or alkaloid substance, such as tobacco, preferably has a particle size smaller than 350 µm (micrometres) and more conveniently comprised between 5 µm and 250 µm (micrometres).

Preferably the powdered material based on vegetable substance and/or alkaloid substance, such as tobacco, has a water content per unit of weight lower than 18%, and optionally comprised between 7% and 12%.

Preferably, the powders of vegetable substance and/or alkaloid substance, such as tobacco, further include powders of said vegetable substance and/or alkaloid substance, such as tobacco, obtained directly from the laminae of tobacco leaves and/or tobacco powders produced during the processing of tobacco leaves and/or other finely pulverised waste of the processing of tobacco leaves, such as for example, the rib of the leaf and/or the veins of the leaf. Clearly, tobacco powders may originate from different types/varieties of tobacco.

Preferably, the percentage of waste from the processing of the leaves of vegetable substance and/or alkaloid substance present in the powdered material is comprised between 10% and 40%.

Furthermore, the powdered material based on vegetable substance and/or alkaloid substance preferably has a percentage of powdered vegetable fibres lower than 30%, and more conveniently it is comprised between 2% and 10%. Preferably, the vegetable fibres present in the powdered material based on vegetable substance and/or alkaloid substance further include natural and/or synthetic cellulose fibres and/or pulp.

Preferably, the powdered material based on vegetable substance and/or alkaloid substance further includes powdered natural and/or synthetic flavouring essences, and/or other powdered additives.

Preferably, the humectant gel on the contrary has viscosity higher than 1000 cP (centiPoise), and more conveniently comprised between 10000 and 500000 cP (centiPoise).

Furthermore, the humectant gel further preferably has a water percentage higher than 50% and optionally comprised between 60% and 80%, and/or a percentage of binding/thickening agents preferably comprised between 2% and 25%.

Preferably, the binding/thickening agents present in the humectant gel further include carboxymethylcellulose and/or Guar flour.

Furthermore, the binding/thickening agents preferably are powdered products with a particle size preferably smaller than 150 µm (micrometres), and optionally comprised between 20 µm and 100 µm (micrometres).

With reference to figure 1, the plant 1 for the production of reconstituted vegetable substance and/or reconstituted alkaloid therefore comprises: a line 2 for the pulverisation of the material, which is adapted to produce and output the powdered material with predetermined particle size and comprising powders of vegetable substance and/or alkaloid substance preferably mixed with powdered vegetable fibres, and optionally also with powdered natural or synthetic flavouring essences and/or other powdered additives; and a gelling machine 3, which is adapted to produce and output the high viscosity and water-based humectant gel.

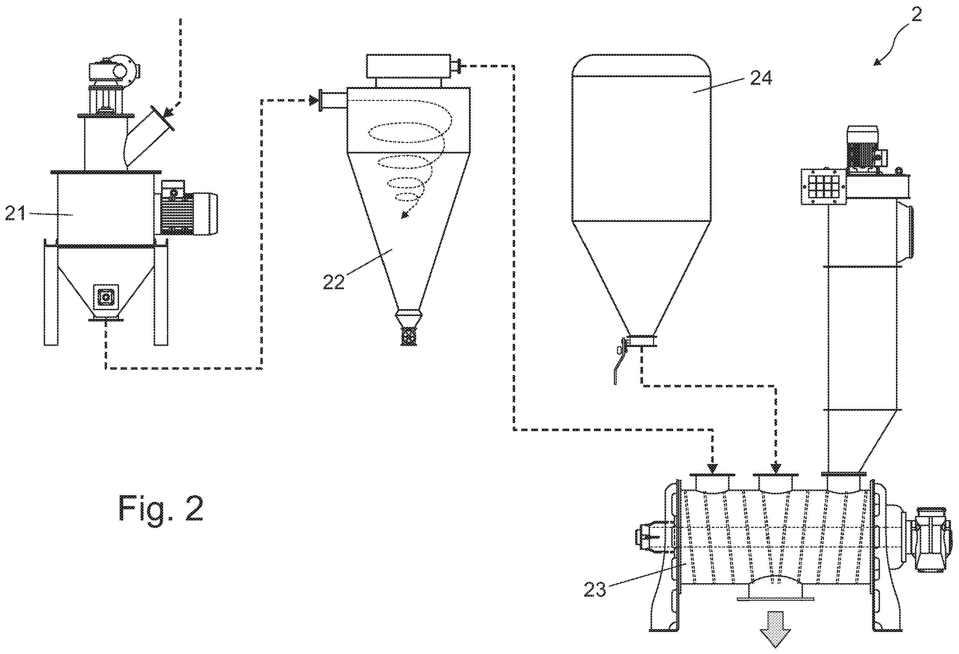

More in detail, with reference to figure 2, in the illustrated example, the pulverisation line 2 preferably comprises: a micronizing mill 21 preferably of the electric or hydraulic driven type, which receives - in input - the laminae of the leaf of vegetable substance or alkaloid substance, such as tobacco, and/or the powder of said vegetable substance or alkaloid substance, such as tobacco, produced during the processing of the tobacco leaves and/or other tobacco leaves processing waste, and outputs a tobacco powder with a predetermined particle size; and a separator filter 22 which receives - in input - the tobacco powder coming from the micronizing mill 21, and it is adapted to retain the particles with a particle size larger than a predetermined limit value.

More in detail, the micronizing mill 21 is preferably adapted to output a tobacco powder with a particle size which has a more or less Gaussian distribution around a predetermined reference value, depending on the settings of the micronizing mill 21.

On the other hand, the separator filter 22 is preferably structured so as to output a refined tobacco powder, which has a particle size comprised between a first and a second predetermined limit value.

More in detail, the separator filter 22 is preferably structured so as to retain the particles with a particle size smaller than a first predetermined limit value, and optionally also so as to send the tobacco particles with particle size larger than a second predetermined limit value, clearly larger than said first limit value, back - in input - to the micronizing mill 21.

In the illustrated example, in particular, the separator filter 22 is preferably a cyclonic separator optionally coupled to a sleeve filter.

Furthermore, the first limit value is preferably equal to about 10 µm (micrometres), while the second limit value is equal to about 90 µm (micrometres).

Clearly, particular applications may require values different from those preferably indicated above.

Furthermore, the refined tobacco powder preferably has a water content per unit of weight lower than 15% and optionally comprised between 7% and 13%.

Furthermore, the pulverisation line 2 preferably comprises a solid powder mixer 23, preferably of the electric or hydraulic driven type, which is adapted to mix the refined tobacco powder coming from the separator filter 22, with vegetable fibres and/or other powdered additives preferably coming from an auxiliary storage tank 24, so as to output said powdered material based on tobacco with predetermined particle size.

Before reaching the solid powder mixer 23, the refined tobacco powder coming from the separator filter 22 can be optionally temporarily stored inside one or more intermediate collection tanks (not visible in the figures).

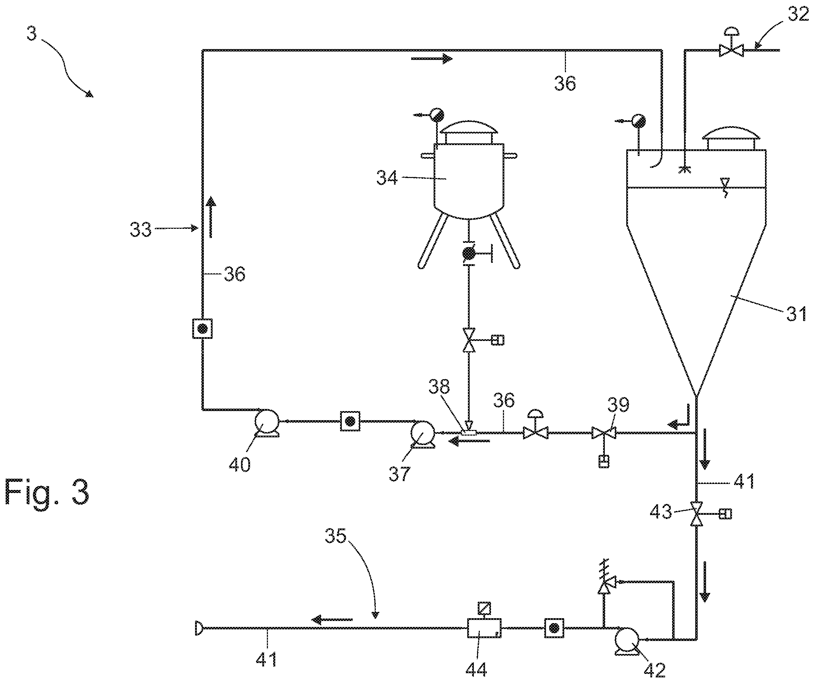

With reference to figure 3, instead, the gelling machine 3 preferably comprises: a reactor or process tank 31, preferably with a substantially hermetic closure, inside which the high viscosity humectant gel is produced; a water supply line 32, which is selectively adapted to introduce/convey water into the tank 31; a mixing and recirculation circuit 33 which is adapted to draw the liquid from the tank 31, mixing it in predetermined ratios with one or more binding/thickening agents (for example carboxymethylcellulose and/or Guar flour) present in an auxiliary container 34, and then re-introducing the resulting liquid into the tank 31; and a discharge line 35, which branches off from the bottom of the tank 31, and it is adapted to convey/transfer the humectant gel which forms and accumulates inside the tank 31 outside the gelling machine 3.

Clearly, the binding/thickening agents could be contained in a plurality of containers 34 connected to the mixing and recirculation circuit 33.

On the other hand, the recirculation circuit 33 preferably comprises: a pipe 36 of predetermined length, which branches off from the bottom of the tank 31 and then reconnects to the upper part of the tank 31; a circulation pump 37, preferably of the electrically-driven type, which is positioned along the pipe 36, and it is adapted to draw the liquid present in the tank 31 and push it along the pipe 36; a venturi injector 38 which is positioned along the pipe 36, immediately upstream of the circulation pump 37, and it is simultaneously also connected to the auxiliary container or containers 34, so as to introduce - into the flow directed toward the suction mouth of the circulation pump 37 - also a predetermined amount of binding/thickening agents coming from the auxiliary container 34; and preferably also a control valve 39 with controlled opening and closing, which is positioned along the pipe 36, upstream of the circulation pump 37 and/or of the venturi injector 38, and it is adapted to control the flow of the liquid directed toward the circulation pump 37.

Preferably, the recirculation circuit 33 further includes a homogenising pump 40, preferably of the electrically-driven type, which is positioned along the pipe 36, downstream of the circulation pump 37, and it is adapted to homogenise the water and binding/thickening agents mixture directed toward the tank 31.

With reference to figure 3, the discharge line 35, instead, preferably comprises: a pipe 41 which branches off from the bottom of the tank 31 and ends at the outlet mouth of the gelling machine 3; and a delivery pump 42 preferably of the electrically-driven type, which is positioned along the pipe 41, and it is adapted to draw and then pump the humectant gel which forms/accumulates in the tank 31, from the tank 31 toward the outlet of the machine.

In the illustrated example, in particular, the delivery pump 42 is preferably a volumetric pump, optionally with variable flow rate.

Furthermore, the discharge line 35 preferably comprises: a control valve 43 with controlled opening and closing, which is positioned along the pipe 41, upstream of the delivery pump 42, and is adapted to control the flow of humectant gel toward the delivery pump 42; and/or a flow meter 44 which is positioned along the pipe 41, downstream of the delivery pump 42, and it is adapted to measure the flow rate of the humectant gel directed toward the outlet mouth of the gelling machine 3.

In addition, the method for the production of reconstituted vegetable substance and/or reconstituted alkaloid in sheet form comprises the steps of:
- mixing the powdered material based on vegetable substance and/or alkaloid substance with the humectant gel so as to obtain a pasty compound based on said vegetable substance and/or alkaloid substance, substantially solid and with a low water content;
- extruding the pasty compound based on said vegetable substance and/or alkaloid substance so as to produce an extruded dough section based on said vegetable substance and/or alkaloid substance, substantially solid and with a low water content; and then
- cutting the extruded dough section based on said vegetable substance and/or alkaloid substance so as to produce a succession of solid and compact small dough blocks/slabs based on said vegetable substance and/or alkaloid substance.

Furthermore, the solid and pasty compound based on said vegetable substance and/or alkaloid substance preferably has a water content per unit of weight lower than 50% and more conveniently comprised between 10% and 40%.

Furthermore, the various dough blocks/slabs based on said vegetable substance and/or alkaloid substance preferably have predetermined and substantially constant weight and/or dimensions. More in detail, the dough blocks/slabs based on said vegetable substance and/or alkaloid substance preferably have a nominal weight lower than 100 gm (grams) and/or a nominal volume lower than 5 cm³ (cubic centimetres).

Preferably, each dough block/slab based on said vegetable substance and/or alkaloid substance has a water content per unit of weight less than or equal to that of the pasty compound based on said vegetable substance and/or alkaloid substance.

In other words, the dough based on said vegetable substance and/or alkaloid substance with which the various dough blocks/slabs based on said vegetable substance and/or alkaloid substance preferably has a water content per unit of weight lower than 50% and more conveniently comprised between 10% and 40%.

Furthermore, the solid and compact dough blocks/slabs based on said vegetable substance and/or alkaloid substance preferably are substantially cylindrical-shaped.

With reference to figures 1, 4, 5 and 6, the plant 1 for the production of a reconstituted vegetable substance and/or reconstituted alkaloid, such as reconstituted tobacco, therefore preferably also comprises: a mixing unit 4 preferably of the electric or hydraulic driven type, which is adapted to mix the tobacco-based powdered material coming from the pulverisation line 2 with the humectant gel coming from the gelling machine 3, so as to produce and output said tobacco-based pasty compound, substantially solid and with a low water content; an extrusion unit 5, preferably of the electric or hydraulic driven type, which is adapted to extrude the tobacco-based pasty compound coming from the mixing unit 4, so as to produce and output an extruded section of tobacco-based dough, substantially solid and with a low water content; and a splitting unit 6 preferably of the electric or hydraulic driven type, which is adapted to continuously cut the extruded section that exits from the extrusion unit 5, so as to produce and output a succession of solid and compact small tobacco-based dough blocks/slabs 100 having predetermined and substantially constant weight and/or dimensions.

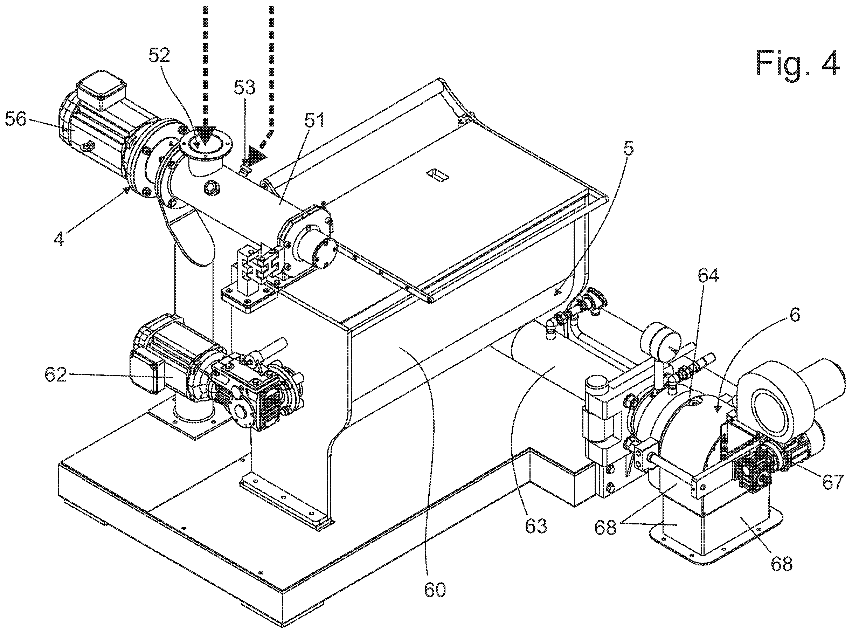

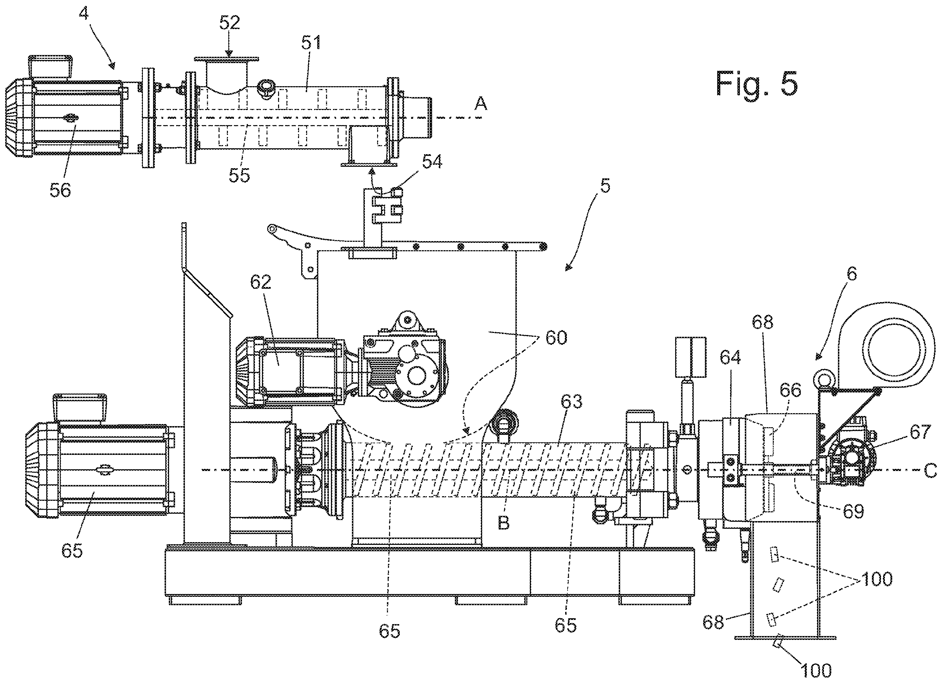

With reference to figures 4 and 5, in the illustrated example, in particular, the mixing unit 4 is preferably an electrically-driven dynamic mixer.

In other words, the mixing unit 4 preferably comprises: an oblong casing 51, which is provided with a substantially cylindrical-shaped internal cavity, two distinct inlet mouths 52 and 53 through which the tobacco-based powdered material and the humectant gel separately enter into the internal cavity, and with an outlet mouth 54 through which the tobacco-based pasty compound exits from the casing 51 and preferably passes into the extrusion unit 5; an oblong-shaped rotary stirrer 55, which is rotatably axially and housed in the cavity of the oblong casing 51, and it is capable of mixing and amalgamating the tobacco-based powdered material with the humectant gel, so as to form the aforementioned tobacco-based pasty compound; and an electric motor 56 which is positioned at one end of the oblong casing 51, preferably outside the same, and it is adapted to drive the rotary stirrer 55 in rotation around the longitudinal axis A thereof, so as to mix and amalgamate the tobacco-based powdered material and the humectant gel, and then push the obtained tobacco-based pasty compound toward the outlet 54 of the oblong casing 51.

With reference to figures 4, 5 and 6, the extrusion unit 5, on the other hand preferably comprises: a storage tank 60, which has a nominal capacity preferably greater than 100 litres, and it is adapted to receive and accumulate the tobacco-based pasty compound coming from the mixing unit 4; an oblong-shaped rotary stirrer (not visible in the figures), which is rotatably axially housed in the storage tank 60, and it is adapted to mix the tobacco-based pasty compound present in the storage tank 60; and a first electric motor 62, which is preferably cantilever-fixed on a side/wall of the storage tank 60, outside the same, and it is adapted to drive the rotary stirrer in rotation around the longitudinal axis thereof.

Preferably, the extrusion unit 5 further comprises also: a cylindrical tubular-shaped extrusion channel 63, communicating with the bottom of the storage tank 60 so as to always be full of tobacco-based pasty compound, and it is closed at one end by a extruder 64 which is provided with at least one, and more conveniently a plurality of orifices of predetermined shape; an endless screw 65 which is rotatably axially housed in the extrusion channel 63, and it is adapted to push the tobacco-based pasty compound toward the extruder 64; and a second electric motor 65, which is preferably positioned at the second end of the extrusion channel 63, namely on the opposite side with respect to the extruder 64, and it is adapted to drive the endless screw 65 in rotation around the longitudinal axis B thereof, so as to continuously and strongly push the tobacco-based pasty compound toward the extruder 64.

The extruder 64 is structured/dimensioned so that the tobacco-based pasty compound exiting from the extruder 64 forms, at each orifice of the extruder 64, a respective wire-like extruded section (not visible in the figures), substantially solid and consisting of tobacco-based dough with low water content per unit weight.

The extrusion unit 5 is therefore preferably a single screw extrusion machine.

Clearly, the extrusion unit 5 could also be a multiple-screw, co-rotating and counter-rotating extrusion machine.

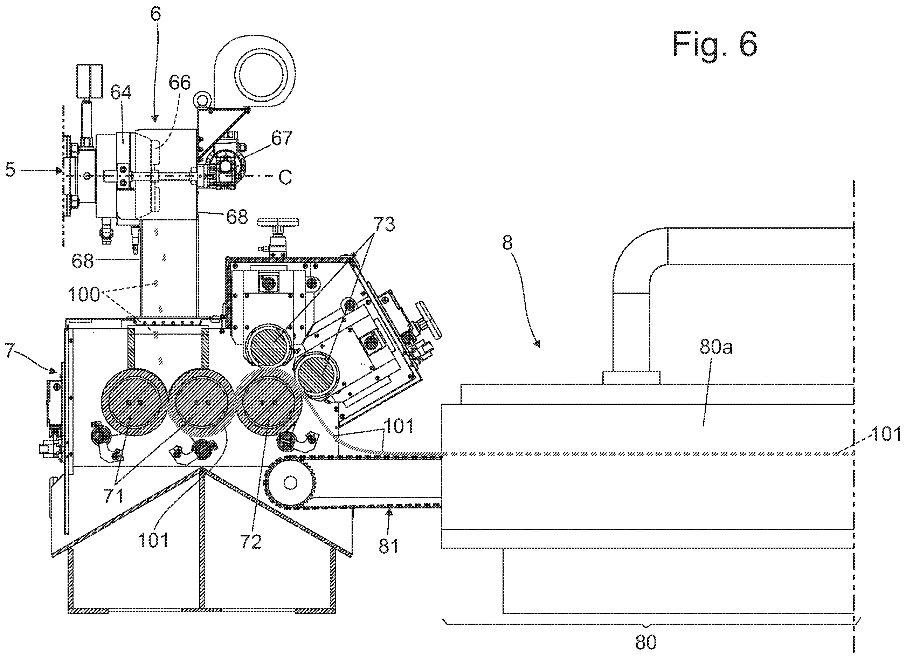

With reference to figures 5 and 6, the splitting unit 6, on the other hand is preferably positioned immediately downstream of the extruder 64 of the extrusion unit 5, and it preferably comprises: a rotary blade 66 preferably with a substantially helical-shaped structure, extending flushed with the outer face of the extruder 64, in the area where the orifice/s is/are located, and it is capable of rotating around a reference axis C substantially perpendicular to the blade 66 and to the surface of the extruder 64, so as to move remaining flushed with the surface of the extruder 64; and an electric motor 67 which is adapted to drive rotary blade 66 in rotation around the axis C, so that the blade 66 can cyclically pass over the orifice/s of the extruder 64 to cut the portion of the wire-like extruded section projecting cantilevered from the extruder 64.

Preferably, the splitting unit 6 further comprises a protective guard 68 with a box-like structure, which covers the extruder 64 of the extrusion unit 5, houses the rotary blade 66 therein and, lastly, it is provided with a discharge mouth which conveys the solid and compact tobacco-based dough blocks/slabs 100 toward the outlet of the splitting unit 6 by gravity.

The rotary blade 66 is clearly movable in the protective guard 68, while the electric motor 67 is preferably positioned outside the protective guard 68.

More in detail, the rotary blade 66 is preferably rigidly fixed to the end of a supporting shaft 69, extending coaxially to the axis C and projects cantilevered outside the protective guard 68, and the electric motor 67 is adapted to drive the support shaft 69 in rotation around the longitudinal axis thereof.

In addition, the method for the production of a reconstituted vegetable substance and/or reconstituted alkaloid in sheet form, such as reconstituted tobacco in sheet form, also comprises the steps of:
- rolling the various tobacco-based dough blocks/slabs 100 in succession so as to form a single large tobacco-based dough sheet of predetermined thickness, substantially solid and strip-like; and then
- drying the tobacco-based dough sheet so as to obtain a reconstituted, solid and compact tobacco sheet and of predetermined thickness.

Furthermore, the tobacco-based dough sheet preferably has an average/nominal thickness smaller than 1.2 mm (millimetres) and more conveniently comprised between 30 and 500 µm (micrometres). Preferably, the tobacco-based dough sheet also has a width comprised between 0.3 and 2m (metres).

Furthermore, the tobacco-based dough sheet preferably has a water content per unit of weight less than or equal to that of the tobacco-based pasty compound.

In other words, the tobacco-based dough forming the sheet preferably has a water content per unit of weight lower than 50% and preferably comprised between 10% and 40%.

Preferably, the step of drying the tobacco-based dough sheet is adapted to bring the water content per weight unit to a value lower than 20%, and more conveniently comprised between 4% and 16%.

Furthermore, the step of drying the tobacco-based dough sheet preferably occurs inside a hot-air furnace and/or an infrared furnace and/or a microwave oven and/or a combined furnace.

With reference to figures 1, 6 and 7, the plant 1 for the production of a reconstituted vegetable substance and/or reconstituted alkaloid, such as reconstituted tobacco, therefore preferably also comprises: a roller rolling unit 7 preferably of the electric or hydraulic driven type, which is adapted to roll the various tobacco-based dough blocks/slabs 100 coming from the splitting unit 6 in succession, so as to output a substantially solid and strip-like single large tobacco-based dough sheet 101 preferably having a thickness and a composition that is substantially constant throughout the width thereof; and a drying line 8 which is adapted to dry the tobacco-based dough sheet 101 coming from the rolling unit 7, so as to output a continuous reconstituted tobacco sheet 102, solid and compact and of predetermined thickness.

More in detail, the rolling unit 7 is provided with several motor-driven laminating rolls, which are arranged one adjacent and substantially tangent to the other, so as to define a rolling path along which the various tobacco-based dough blocks/slabs 100 coming from the splitting unit 6 are pressed and joined to each other so as to form said tobacco-based dough sheet 101.

The drying line 8, on the other hand, is adapted to heat the tobacco-based dough sheet 101 so as to cause rapid evaporation of the water contained in the sheet, so as to bring the water content per unit of weight to a value lower than 20%, and optionally comprised between 4% and 16%.

With reference to figure 6, in the illustrated example, in particular, the rolling roller unit 7 is preferably structured so as to produce in output a tobacco-based dough sheet 101 with an average/nominal thickness comprised between 30 and 500 µm (micrometres).

Preferably, the rolling unit 7 further comprises: two primary laminating rolls 71, mutually opposite and preferably also substantially horizontal and/or parallel to each other, which are arranged one adjacent and substantially tangent to the other, and they are positioned below the splitting unit 6, or rather below the outlet mouth of the protective guard 68 of the splitting unit 6, so that the tobacco-based dough blocks/slabs 100 produced by the splitting unit 6 can fall directly into the narrowing/fissure delimited by the laminating rolls 71 by gravity; a secondary rolling roll 72, which is arranged adjacent and substantially tangent to one of the two primary laminating rolls 71, so as to receive the tobacco-based dough sheet 101 formed by the primary laminating rolls 71; and a drive unit (not shown in the figures) which is adapted to drive the laminating rolls 71 and 72 in rotation in a synchronised manner around the respective longitudinal axes thereof.

Preferably, the rolling unit 7 is further provided also with one or more segmentation rolls 73 (two in the illustrated example) which are arranged beside the secondary rolling roll 72, and they are selectively capable of cutting the tobacco-based dough sheet 101 into a succession of segments of predetermined length.

More in detail, the segmentation roll/s 73 can be selectively positioned in abutment on the periphery of the secondary rolling roll 72, and they are provided with one or more cutting transverse ridges, each of which is adapted to cut or engrave a preferential fracture line, on the tobacco-based dough sheet 101 lying on/adhering to the periphery of the secondary rolling roll 72.

Optionally, the plant 1 for the production of a reconstituted vegetable substance and/or reconstituted alkaloid, such as reconstituted tobacco, may comprise - between the splitting unit 6 and the rolling unit 7 - also a dynamic distributor (not visible in the figures) preferably of the electric or hydraulic driven type, which is adapted to distribute the tobacco-based dough blocks/slabs 100 coming from the splitting unit 6, in a substantially uniform manner along the entire length of the narrowing/fissure delimited by the laminating rolls 71 of the rolling unit 7.

The dynamic distributor may be a swivel chute when the length of the narrowing/fissure delimited by the laminating rolls 71 is preferably smaller than 0.8 m (metres), or a swivel conveyor belt when the length of the narrowing/fissure delimited by the laminating rolls 71 is greater.

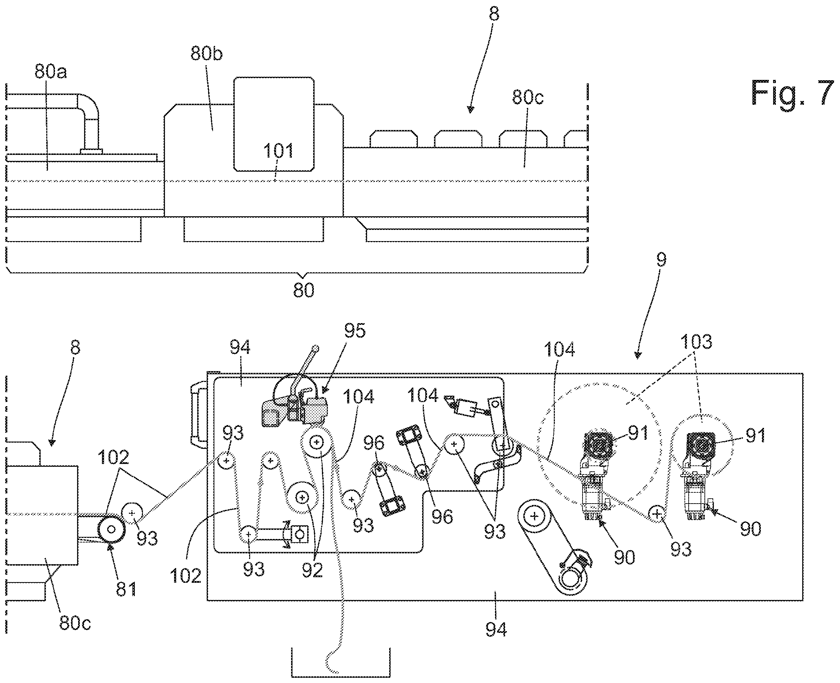

With reference to figures 6 and 7, the drying line 8, on the other hand, preferably comprises: a drying tunnel 80 of predetermined length and preferably of the electrically-driven type and a linear conveyor belt 81 or the like, preferably electrically actuated, extending passing through the drying tunnel 80, and adapted to advance the tobacco-based dough sheet 101 that exits the rolling unit 7, along and inside the drying tunnel 80 at a predetermined speed, so as to cause the rapid evaporation of the water contained in the tobacco-based dough sheet 101, and output said reconstituted tobacco sheet 102.

Preferably, the drying tunnel 80 further includes a hot air furnace 80a, an infrared furnace 80b and a microwave furnace 80c arranged one after the other.

Clearly, in a different embodiment, the drying tunnel 80 may comprise the hot air furnace 80a alone, the infrared furnace 80b alone or the microwave furnace 80c alone or any combination of the aforementioned furnaces 80a, 80b and 80c.

Lastly, after producing the sheet 102 of reconstituted vegetable substance and/or reconstituted alkaloid, such as reconstituted tobacco, the method for the production of reconstituted vegetable substance and/or reconstituted alkaloid in sheet form, such as reconstituted tobacco sheet, preferably also comprises the step of winding (wind into a coil) the reconstituted tobacco sheet 102, so as to form one or more coils of reconstituted tobacco of predetermined dimensions.

Preferably, before the winding step, the method for the production of reconstituted tobacco in sheet form further comprises the step of trimming/evening the two sides of the reconstituted tobacco sheet 102, so as to obtain a reconstituted tobacco sheet 102 of predetermined and substantially constant width.

Preferably, before the winding step, the method for the production of reconstituted tobacco in sheet form also comprises the step of cutting the reconstituted tobacco sheet 102 longitudinally, so as to divide the sheet into two or more reconstituted tobacco strips of predetermined width, which are then wound in coils separately from each other.

Preferably, the two or more reconstituted tobacco strips are further wound so as to form the respective reconstituted tobacco coils, side by side on the same winding hub.

With reference to figures 1 and 7, the plant 1 for the production of a reconstituted vegetable substance and/or reconstituted alkaloid, such as reconstituted tobacco, therefore preferably also comprises a winding machine 9, which is positioned downstream of the drying line 8, or rather downstream of the drying tunnel 80, and it is adapted to continuously wind (wind into a coil) the reconstituted tobacco sheet 102 which exits the drying line 8, so as to output a succession of reconstituted tobacco coils 103 of predetermined dimensions.

Preferably, the winding machine 9 is further adapted to trim/match the two sides of the reconstituted tobacco sheet 102 that exits from the drying line 8 before winding, so as to obtain a reconstituted tobacco sheet 102 of predetermined and substantially constant width.

In addition, the winding machine 9 is preferably also adapted to continuously cut the reconstituted tobacco sheet 102 that exits from the drying line 8 parallel to the advancement direction thereof, so as to divide the sheet into two or more reconstituted tobacco strips 104 of predetermined width, and then to wind each reconstituted tobacco strip 104 separately from the others.

Furthermore, the winding machine 9 is preferably structured so that the two or more reconstituted tobacco strips 104 are wound to form the relative reconstituted tobacco coils 103, side by side on the same winding hub.

In the illustrated example, in particular, the winding machine 9 preferably comprises: one or more motor-driven winding units 90, preferably of the electrically-driven type, each of which is provided with a substantially cylindrical-shaped winding hub 91, which is capable of rotating around the longitudinal axis thereof so as to be able to wind (wind into a coil) the reconstituted tobacco sheet 102, or rather the individual reconstituted tobacco strips 104 adjacent to each other; and several guide rollers, which are parallel to each other and to the winding hubs 91, and they are arranged one spaced beside the other so as to be able to guide the reconstituted tobacco sheet 102, or rather the various reconstituted tobacco strips 104, toward any one of the motor-driven winding units 90.

More in detail, the winding machine 9 is preferably provided with one or more drive guide rollers 92, which are motor-driven and adapted to guide and pull/push the reconstituted tobacco sheet 102, or rather the various reconstituted tobacco strips 104, toward any one of the motor-driven winding units 90; and a plurality of idle guide rollers 93, which are capable of freely rotating around the longitudinal axis thereof and they are adapted to guide the reconstituted tobacco sheet 102, or rather the various reconstituted tobacco strips 104, toward any one of the motor-driven winding units 90.

In addition, in the illustrated example the winding machine 9 is preferably provided with two distinct winding units 90, which are used to wind the reconstituted tobacco sheet 102, or rather the individual reconstituted tobacco strips 104, one as an alternative to other.

Furthermore, the motor-driven winding unit/s 90 is/are preferably fixed to a rigid structure 94 for supporting the winding machine 9 so that the corresponding rotary winding hub 91 projects cantilevered from a vertical side of the rigid support structure 94, so as to be easily accessible from the external of the winding machine 9.

Furthermore, the guide rollers 92 and 93 are preferably rotatably axially fixed on the rigid structure 94 for supporting the winding machine 9, so as to project cantilevered from the vertical side of the rigid support structure 94 spaced beside the winding hub/s 91.

With reference to figure 7, the winding machine 9 preferably further comprises a cutting unit 95, which is adapted to trim/even the two sides of the reconstituted tobacco sheet 102 which advances toward any one of the motor-driven winding units 90.

More in detail, the cutting unit 95 is preferably positioned beside one of the drive guide rollers 92, and it is preferably provided with at least two disc blades, coaxial and arranged side by side with respect to each other, which are arranged in rolling contact on the periphery of the drive guide rollers 92, so as to be able to continuously cut without reconstituted tobacco sheet 102 parallel to the advancement direction thereof.

Preferably, the winding machine 9 further comprises a second cutting unit, which is adapted to divide the reconstituted tobacco sheet 102 which advances toward any one of the motor-driven winding units 90, into two or more reconstituted tobacco strips 104 of predetermined width, which then advance separately toward the designated winding unit 90 arranged side by side.

More in detail, the second cutting unit is preferably positioned beside one of the drive guide rollers 92, and it is preferably provided with one or more disc blades coaxial and arranged side by side, each of which is arranged in rolling contact on the periphery of the drive guide roller 92, so as to be able to continuously cut the reconstituted tobacco sheet 102 parallel to the advancement direction thereof.

Lastly, the winding machine 9 preferably comprises one or more diverging rollers 96 with a banana-shaped profile, which are arranged downstream of the second cutting unit and they are adapted to detach the two or more reconstituted tobacco strips 104 advancing separately toward the designated winding unit 90 by a few millimetres from each other.

In the illustrated example, in particular, the second cutting unit is preferably incorporated in the cutting unit 95.

In other words, the cutting unit 95 is preferably provided with three or more disc blades arranged side by side, which are arranged in rolling contact on the periphery of the drive guide roller 92 so as to be able to continuously cut the reconstituted tobacco sheet 102 which advances toward any of the motor-driven winding units 90.

The two outermost disc blades are adapted to trim/even the two sides of the reconstituted tobacco sheet 102 which advances toward any one of the motor-driven winding units 90. On the other hand, the inner disc blade/s is/are adapted to divide the sheet into two or more reconstituted tobacco strips 104 of predetermined width, which then advance separately toward the designated winding unit 90 arranged side by side.

Lastly, the winding hub 91 of the or of each motor-driven winding unit 90 is preferably structured so as to be able to simultaneously and separately wind the various reconstituted tobacco strips 104 into coils.

In other words, the winding hub 91 of the or of each motor-driven winding unit 90 of the winding machine 9 is preferably structured so as to be able to simultaneously support and form a plurality of reconstituted tobacco coils 103, arranged one adjacent and coaxial to the other.

There are considerable advantages associated with the method and plant 1 for the production of a reconstituted vegetable substance and/or reconstituted alkaloid, such as reconstituted tobacco, as described above.

Firstly, the method for the production of said reconstituted vegetable substance and/or reconstituted alkaloid in sheet form described above has a considerably lower water and electrical energy consumption compared to the currently known production methods, with the ensuing lower production costs.

As a matter of fact, the dough sheet based on said vegetable substance or alkaloid substance 101 produced by the rolling roller unit 7 has a relatively low water content per unit of weight, and this results in a shorter residence time in the drying tunnel 80 with entailed saving in terms of space and electrical energy.

As a matter of fact, the drying tunnel 80 is significantly shorter than the drying tunnels used to dry the slurry.

Furthermore, the sheet of the reconstituted vegetable substance and/or reconstituted alkaloid 102 obtained from the dough sheet based on said reconstituted vegetable substance and/or reconstituted alkaloid 101 is much more resilient, compact and tensile-resistant with respect to the sheets obtained from the slurry, with all the entailed advantages during the winding at the end of the drying tunnel 80.

Last but not least, the sheet of said reconstituted vegetable substance and/or reconstituted alkaloid 102 has an extremely homogeneous and easily replicable composition; in particular, the reconstituted tobacco sheet thus obtained is particularly adapted for use in the production of the cartridges of state-of-the-art heat-not-burn electronic devices.

Lastly, it is clear that the method and the plant 1 for the production of reconstituted vegetable substance and/or a reconstituted alkaloid can be subjected to modifications and variations without departing from the scope of protection of the present invention.

For example, in a different embodiment, the sheet of said reconstituted vegetable substance and/or reconstituted alkaloid 102 exiting from the drying tunnel 80 can be immediately cut into regular-shaped pieces, in particular, the reconstituted tobacco sheet thus obtained can be shredded so as to be subsequently mixed with the normal shredded tobacco for cigarettes.

## Claims

1. Method for the production of reconstituted vegetable substances and/or reconstituted alkaloid substances, comprising the steps of:
- separately producing a powdered material with a predetermined particle size and comprising powders of said vegetable substances and/or alkaloid substances and a water-based humectant gel having viscosity higher than 1000 cP;
- mixing the powdered material based on said vegetable substances and/or alkaloid substances with the humectant gel so as to obtain a pasty compound based on said vegetable substances and/or alkaloid substances, substantially solid and with a water content lower than 50% per unit of weight;
- extruding the pasty compound based on said vegetable substances and/or alkaloid substances so as to produce an extruded dough section based on said vegetable substances and/or alkaloid substances, substantially solid and with a water content lower than 50% per unit of weight;
- cutting the extruded dough section based on said vegetable substances and/or alkaloid substances so as to produce a succession of small dough blocks/slabs based on said vegetable substances and/or alkaloid substances (100) wherein said small dough blocks/slabs have volume lower than 5 cm³;
- rolling the various dough blocks/slabs based on said vegetable substances and/or alkaloid substances (100) in succession so as to form a single dough sheet based on said vegetable substances and/or alkaloid substances (101) of predetermined thickness, substantially solid and strip-like; and then
- drying the dough sheet based on said vegetable substances and/or alkaloid substances (101) so as to obtain a sheet of said reconstituted vegetable substances and/or reconstituted alkaloid substances (102);
- cutting the sheet of said reconstituted vegetable substances and/or reconstituted alkaloid substances (102) longitudinally, so as to divide the sheet into two or more strips of said reconstituted vegetable substances and/or reconstituted alkaloid substances (104), which are then wound into coils separately from each other;
- winding the sheet of said reconstituted vegetable substances and/or reconstituted alkaloid substances (102), so as to form one or more coils of said reconstituted vegetable substances and/or reconstituted alkaloid substances (103) of predetermined dimensions,
**characterized in that**
the two or more strips of said reconstituted vegetable substances and/or reconstituted alkaloid substances (104) are further wound to form the relative coils of said reconstituted vegetable substances and/or reconstituted alkaloid substances (103), arranged side by side on the same winding hub (91).

2. Method for the production of reconstituted vegetable substances and/or reconstituted alkaloid substances according to claim 1, wherein the powdered material based on said vegetable substances and/or alkaloid substances comprises powders of said vegetable substances and/or alkaloid substances mixed with vegetable fibres and/or powdered additives.

3. Method for the production of reconstituted vegetable substances and/or reconstituted alkaloid substances according to claim 1 or 2, wherein the powdered material based on said vegetable substances and/or alkaloid substances has a particle size smaller than 350 µm, and preferably comprised between 5 µm and 250 µm.

4. Method for the production of reconstituted vegetable substances and/or reconstituted alkaloid substances according to any one of the preceding claims, wherein the powdered material based on said vegetable substances and/or alkaloid substances has a water content per unit of weight lower than 18%, and optionally comprised between 7% and 12%.

5. Method for the production of reconstituted vegetable substances and/or reconstituted alkaloid substances according to any one of the preceding claims, wherein the humectant gel has a viscosity preferably comprised between 10000 and 500000 cP.

6. Method for the production of reconstituted vegetable substances and/or reconstituted alkaloid substances according to any one of the preceding claims, wherein the humectant gel comprises water and a percentage of binding/thickening agents comprised between 2% and 25%.

7. Method for the production of reconstituted vegetable substances and/or reconstituted alkaloid substances according to claim 6, wherein the binding/thickening agents include carboxymethylcellulose and/or Guar flour.

8. Method for the production of reconstituted vegetable substances and/or reconstituted alkaloid substances according to any one of the preceding claims, wherein the pasty compound based on said vegetable substances and/or alkaloid substances has a water content per unit of weight comprised between 10% and 40%.

9. Method for the production of reconstituted vegetable substances and/or reconstituted alkaloid substances according to any one of the preceding claims, **characterised in that** it comprises, prior to the winding step, also the step of trimming/evening the two sides of the sheet of said reconstituted vegetable substances and/or reconstituted alkaloid substances (102), so as to obtain a sheet of said reconstituted vegetable substances and/or reconstituted alkaloid substances (102) of predetermined and substantially constant width.

10. Plant for the production of reconstituted vegetable substances and/or reconstituted alkaloid substances (1), comprising: a line (2) for the pulverisation of the material, which is adapted to produce and output a powdered material with a predetermined particle size and comprising powders of said vegetable substances and/or alkaloid substances preferably mixed with powdered vegetable fibres; a gelling machine (3), which is adapted to produce and output a water-based humectant gel having viscosity higher than 1000 cP; a mixing unit (4), which is adapted to mix the powdered material based on said vegetable substances and/or alkaloid substances coming from said pulverisation line (2) with the humectant gel coming from said gelling machine (3), so as to produce and output a pasty compound based on said vegetable substances and/or alkaloid substances, substantially solid; an extrusion unit (5), which is adapted to extrude the pasty compound based on said vegetable substances and/or alkaloid substances coming from said mixing unit (4), so as to produce and output an extruded dough section based on said vegetable substances and/or alkaloid substances; a splitting unit (6), which is adapted to continuously cut the extruded section that exits from said extrusion unit (5), so as to produce and output a succession of small dough blocks/slabs based on said vegetable substances and/or alkaloid substances (100) wherein said small dough blocks/slabs have volume lower than 5 cm³; a roller rolling unit (7), which is adapted to roll the various dough blocks/slabs based on said vegetable substances and/or alkaloid substances (100) coming from said splitting unit (6) in succession, so as to output a single dough sheet based on said vegetable substances and/or alkaloid substances (101); and a drying line (8) which is adapted to dry the dough sheet based on said vegetable substances and/or alkaloid substances (101) coming from said rolling unit (7), so as to output a sheet of said reconstituted vegetable substances and/or reconstituted alkaloid substances (102); a winding machine (9), which is positioned downstream of the drying line (8), and it is adapted to wind the sheet of said reconstituted vegetable substances and/or reconstituted alkaloid substances (102) that exits from said drying line (8), so as to output a succession of coils of said reconstituted vegetable substances and/or reconstituted alkaloid substances (103); **characterized in that**
said winding machine (9) is adapted to continuously cut the sheet of said reconstituted vegetable substances and/or reconstituted alkaloid substances (102) that exits from the drying line (8) parallel to advancement direction thereof, so as to divide the sheet into two or more strips of said reconstituted vegetable substances and/or reconstituted alkaloid substances (104) of predetermined width, and then to wind each strip of said reconstituted vegetable substances and/or reconstituted alkaloid substances (104) separately from the others.

11. Plant for the production of reconstituted vegetable substances and/or reconstituted alkaloid substances according to claim 10, wherein the winding machine (9) is provided with at least one rotary winding hub (91) on which the various strips of said reconstituted vegetable substances and/or reconstituted alkaloid substances (104) are simultaneously and separately wound into coils.

## Patentansprüche

1. Verfahren zur Herstellung von rekonstituierten pflanzlichen Substanzen und/oder rekonstituierten Alkaloidsubstanzen, umfassend die Schritte:
- separates Herstellen eines pulverförmigen Materials mit einer vorbestimmten Partikelgröße und umfassend Pulver der pflanzlichen Substanzen und/oder Alkaloidsubstanzen und ein wasserbasiertes Feuchthaltegel mit einer Viskosität von mehr als 1000 cP;
- Mischen des pulverförmigen, auf den pflanzlichen Substanzen und/oder Alkaloidsubstanzen basierenden Materials mit dem Feuchthaltegel, um eine pastöse, auf den pflanzlichen Substanzen und/oder Alkaloidsubstanzen basierende Masse zu erhalten, im Wesentlichen fest und mit einem Wassergehalt von weniger als 50 % pro Gewichtseinheit;
- Extrudieren der pastösen, auf den pflanzlichen Substanzen und/oder Alkaloidsubstanzen basierenden Masse, um einen extrudierten, auf den pflanzlichen Substanzen und/oder Alkaloidsubstanzen basierenden Teigabschnitt herzustellen, im Wesentlichen fest und mit einem Wassergehalt von weniger als 50 % pro Gewichtseinheit;
- Schneiden des extrudierten, auf den pflanzlichen Substanzen und/oder Alkaloidsubstanzen basierenden Teigabschnitts, um eine Abfolge von kleinen, auf den pflanzlichen Substanzen und/oder Alkaloidsubstanzen basierenden Teigblöcken/-platten (100) herzustellen, wobei die kleinen Teigblöcke/-platten ein Volumen von weniger als 5 cm³ aufweisen;
- Walzen der verschiedenen, auf den pflanzlichen Substanzen und/oder Alkaloidsubstanzen basierenden Teigblöcke/-platten (100) in Abfolge, um eine einzelne, auf den pflanzlichen Substanzen und/oder Alkaloidsubstanzen basierende Teigbahn (101) mit vorbestimmter Dicke, im Wesentlichen fest und streifenartig, zu bilden; und dann
- Trocknen der auf den pflanzlichen Substanzen und/oder Alkaloidsubstanzen basierenden Teigbahn (101), um eine Bahn der rekonstituierten pflanzlichen Substanzen und/oder rekonstituierten Alkaloidsubstanzen (102) zu erhalten;
- Schneiden der Bahn der rekonstituierten pflanzlichen Substanzen und/oder rekonstituierten Alkaloidsubstanzen (102) in Längsrichtung, um die Bahn in zwei oder mehr Streifen der rekonstituierten pflanzlichen Substanzen und/oder rekonstituierten Alkaloidsubstanzen (104) zu teilen, welche dann getrennt voneinander zu Coils gewickelt werden;
- Wickeln der Bahn der rekonstituierten pflanzlichen Substanzen und/oder rekonstituierten Alkaloidsubstanzen (102), um ein oder mehrere Coils der rekonstituierten pflanzlichen Substanzen und/oder rekonstituierten Alkaloidsubstanzen (103) mit vorbestimmten Abmessungen zu bilden,
**dadurch gekennzeichnet, dass**
die zwei oder mehr Streifen der rekonstituierten pflanzlichen Substanzen und/oder rekonstituierten Alkaloidsubstanzen (104) ferner gewickelt werden, um die relativen Coils der rekonstituierten pflanzlichen Substanzen und/oder rekonstituierten Alkaloidsubstanzen (103), nebeneinander auf demselben Wickelkern (91) angeordnet, zu bilden.

2. Verfahren zur Herstellung von rekonstituierten pflanzlichen Substanzen und/oder rekonstituierten Alkaloidsubstanzen gemäß Anspruch 1, wobei das pulverförmige, auf den pflanzlichen Substanzen und/oder Alkaloidsubstanzen basierende Material Pulver der pflanzlichen Substanzen und/oder Alkaloidsubstanzen gemischt mit Pflanzenfasern und/oder pulverförmigen Zusätzen umfasst.

3. Verfahren zur Herstellung von rekonstituierten pflanzlichen Substanzen und/oder rekonstituierten Alkaloidsubstanzen gemäß Anspruch 1 oder 2, wobei das pulverförmige, auf den pflanzlichen Substanzen und/oder Alkaloidsubstanzen basierende Material eine Partikelgröße kleiner als 350 µm und vorzugsweise zwischen 5 µm und 250 µm aufweist.

4. Verfahren zur Herstellung von rekonstituierten pflanzlichen Substanzen und/oder rekonstituierten Alkaloidsubstanzen gemäß einem der vorhergehenden Ansprüche, wobei das pulverförmige, auf den pflanzlichen Substanzen und/oder Alkaloidsubstanzen basierende Material einen Wassergehalt pro Gewichtseinheit von weniger als 18 % und gegebenenfalls zwischen 7 % und 12 % aufweist.

5. Verfahren zur Herstellung von rekonstituierten pflanzlichen Substanzen und/oder rekonstituierten Alkaloidsubstanzen gemäß einem der vorhergehenden Ansprüche, wobei das Feuchthaltegel eine Viskosität vorzugsweise zwischen 10000 und 500000 cP aufweist.

6. Verfahren zur Herstellung von rekonstituierten pflanzlichen Substanzen und/oder rekonstituierten Alkaloidsubstanzen gemäß einem der vorhergehenden Ansprüche, wobei das Feuchthaltegel Wasser und einen Prozentsatz an Binde-/Verdickungsmittel zwischen 2 % und 25 % umfasst.

7. Verfahren zur Herstellung von rekonstituierten pflanzlichen Substanzen und/oder rekonstituierten Alkaloidsubstanzen gemäß Anspruch 6, wobei die Binde-/Verdickungsmittel Carboxymethylcellulose und/oder Guarkernmehl einschließen.

8. Verfahren zur Herstellung von rekonstituierten pflanzlichen Substanzen und/oder rekonstituierten Alkaloidsubstanzen gemäß einem der vorhergehenden Ansprüche, wobei die pastöse, auf den pflanzlichen Substanzen und/oder Alkaloidsubstanzen basierende Masse einen Wassergehalt pro Gewichtseinheit zwischen 10 % und 40 % aufweist.

9. Verfahren zur Herstellung von rekonstituierten pflanzlichen Substanzen und/oder rekonstituierten Alkaloidsubstanzen gemäß einem der vorhergehenden Ansprüche, **dadurch gekennzeichnet, dass** es vor dem Wickelschritt auch den Schritt des Trimmens/Egalisierens der zwei Seiten der Bahn der rekonstituierten pflanzlichen Substanzen und/oder rekonstituierten Alkaloidsubstanzen (102) umfasst, um eine Bahn der rekonstituierten pflanzlichen Substanzen und/oder rekonstituierten Alkaloidsubstanzen (102) mit vorbestimmter und im Wesentlichen konstanter Breite zu erhalten.

10. Anlage zur Herstellung von rekonstituierten pflanzlichen Substanzen und/oder rekonstituierten Alkaloidsubstanzen (1), umfassend: eine Linie (2) zur Pulverisierung des Materials, welche angepasst ist, um ein pulverförmiges Material mit einer vorbestimmten Partikelgröße und umfassend Pulver der pflanzlichen Substanzen und/oder Alkaloidsubstanzen, vorzugsweise mit pulverförmigen Pflanzenfasern gemischt, herzustellen und auszugeben; eine Gelierungsmaschine (3), welche angepasst ist, um ein wasserbasiertes Feuchthaltegel mit einer Viskosität von mehr als 1000 cP herzustellen und auszugeben; eine Mischeinheit (4), welche angepasst ist, um das pulverförmige, auf den pflanzlichen Substanzen und/oder Alkaloidsubstanzen basierende Material, welches von der Pulverisierungslinie (2) kommt, mit dem Feuchthaltegel, welches von der Gelierungsmaschine (3) kommt, zu mischen, um eine pastöse, auf den pflanzlichen Substanzen und/oder Alkaloidsubstanzen basierende Masse, im Wesentlichen fest, herzustellen und auszugeben; eine Extrusionseinheit (5), welche angepasst ist, die pastöse, auf den pflanzlichen Substanzen und/oder Alkaloidsubstanzen basierende Masse, welche von der Mischeinheit (4) kommt, zu extrudieren, um einen extrudierten, auf den pflanzlichen Substanzen und/oder Alkaloidsubstanzen basierenden Teigabschnitt herzustellen und auszugeben; eine Spalteinheit (6), welche angepasst ist, den extrudierten Abschnitt, der aus der Extrusionseinheit (5) austritt, kontinuierlich zu schneiden, um eine Abfolge von kleinen, auf den pflanzlichen Substanzen und/oder Alkaloidsubstanzen basierenden Teigblöcken/-platten (100) herzustellen und auszugeben, wobei die kleinen Teigblöcke/-platten ein Volumen von weniger als 5 cm³ aufweisen; eine Walzenrolleneinheit (7), welche angepasst ist, um die verschiedenen von der Spalteinheit (6) kommenden, auf den pflanzlichen Substanzen und/oder Alkaloidsubstanzen basierenden Teigblöcke/-platten (100) in Abfolge zu walzen, um eine einzelne, auf den pflanzlichen Substanzen und/oder Alkaloidsubstanzen basierende Teigbahn (101) auszugeben; und eine Trocknungslinie (8), welche angepasst ist, um die von der Walzenrolleneinheit (7) kommende, auf den pflanzlichen Substanzen und/oder Alkaloidsubstanzen basierende Teigbahn (101) zu trocknen, um eine Bahn der rekonstituierten pflanzlichen Substanzen und/oder rekonstituierten Alkaloidsubstanzen (102) auszugeben; eine Wickelmaschine (9), welche nach der Trocknungslinie (8) positioniert ist und welche angepasst ist, die Bahn der rekonstituierten pflanzlichen Substanzen und/oder rekonstituierten Alkaloidsubstanzen (102), welche aus der Trocknungslinie (8) austritt, zu wickeln, um eine Abfolge von Coils der rekonstituierten pflanzlichen Substanzen und/oder rekonstituierten Alkaloidsubstanzen (103) auszugeben;
**dadurch gekennzeichnet, dass**
die Wickelmaschine (9) angepasst ist, um die Bahn der rekonstituierten pflanzlichen Substanzen und/oder rekonstituierten Alkaloidsubstanzen (102), welche aus der Trocknungslinie (8) austritt, parallel zu deren Vorschubrichtung kontinuierlich zu schneiden, um die Bahn in zwei oder mehr Streifen der rekonstituierten pflanzlichen Substanzen und/oder rekonstituierten Alkaloidsubstanzen (104) mit vorbestimmter Breite zu teilen, und dann jeden Streifen der rekonstituierten pflanzlichen Substanzen und/oder rekonstituierten Alkaloidsubstanzen (104) getrennt von den anderen zu wickeln.

11. Anlage zur Herstellung von rekonstituierten pflanzlichen Substanzen und/oder rekonstituierten Alkaloidsubstanzen gemäß Anspruch 10, wobei die Wickelmaschine (9) mit mindestens einem rotierenden Wickelkern (91) versehen ist, auf welchem die verschiedenen Streifen der rekonstituierten pflanzlichen Substanzen und/oder rekonstituierten Alkaloidsubstanzen (104) gleichzeitig und getrennt zu Coils gewickelt werden.

## Revendications

1. - Procédé de production de substances végétales reconstituées et/ou de substances alcaloïdes reconstituées, comprenant les étapes consistant à :
- produire de façon séparée une matière pulvérulente ayant une dimension de particule prédéterminée et comprenant des poudres desdites substances végétales et/ou substances alcaloïdes et un gel humectant à base aqueuse ayant une viscosité supérieure à 1000 cP ;
- mélanger la matière pulvérulente à base desdites substances végétales et/ou substances alcaloïdes avec le gel humectant de façon à obtenir un mélange pâteux à base desdites substances végétales et/ou substances alcaloïdes, sensiblement solide et avec une teneur en eau inférieure à 50 % par unité de poids ;
- extruder le mélange pâteux à base desdites substances végétales et/ou substances alcaloïdes de façon à obtenir une section de pâte extrudée à base desdites substances végétales et/ou substances alcaloïdes, sensiblement solide et avec une teneur en eau inférieure à 50 % par unité de poids ;
- couper la section de pâte extrudée à base desdites substances végétales et/ou substances alcaloïdes de façon à produire une succession de petits blocs/plaques de pâte à base desdites substances végétales et/ou substances alcaloïdes (100), lesdits petits blocs/plaques de pâte ayant un volume inférieur à 5 cm³;
- laminer les différents blocs/plaques de pâte à base desdites substances végétales et/ou substances alcaloïdes (100) de manière successive de façon à former une seule feuille de pâte à base desdites substances végétales et/ou substances alcaloïdes (101) d'une épaisseur prédéterminée, sensiblement solide et en forme de bande ; puis
- sécher la feuille de pâte à base desdites substances végétales et/ou substances alcaloïdes (101) de façon à obtenir une feuille desdites substances végétales reconstituées et/ou substances alcaloïdes reconstituées (102) ;
- couper la feuille desdites substances végétales reconstituées et/ou substances alcaloïdes reconstituées (102) de façon longitudinale, de façon à diviser la feuille en au moins deux bandes desdites substances végétales reconstituées et/ou substances alcaloïdes reconstituées (104), lesquelles sont ensuite enroulées en enroulements séparément les uns des autres ;
- enrouler la feuille desdites substances végétales reconstituées et/ou substances alcaloïdes reconstituées (102), de façon à former un ou plusieurs enroulements desdites substances végétales reconstituées et/ou substances alcaloïdes reconstituées (103) de dimensions prédéterminées,
**caractérisé par le fait que**
les au moins deux bandes desdites substances végétales reconstituées et/ou substances alcaloïdes reconstituées (104) sont encore enroulées pour former les enroulements relatifs desdites substances végétales reconstituées et/ou substances alcaloïdes reconstituées (103), disposés côte à côte sur le même moyeu d'enroulement (91).

2. - Procédé de fabrication de substances végétales reconstituées et/ou de substances alcaloïdes reconstituées, selon la revendication 1, dans lequel la matière pulvérulente à base desdites substances végétales et/ou substances alcaloïdes comprend des poudres desdites substances végétales et/ou substances alcaloïdes mélangées avec des fibres végétales et/ou des additifs pulvérulents.

3. - Procédé de fabrication de substances végétales reconstituées et/ou de substances alcaloïdes reconstituées, selon la revendication 1 ou 2, dans lequel la matière pulvérulente à base desdites substances végétales et/ou substances alcaloïdes a une dimension de particule inférieure à 350 µm, et, de préférence, comprise entre 5 µm et 250 µm.

4. - Procédé de fabrication de substances végétales reconstituées et/ou de substances alcaloïdes reconstituées, selon l'une quelconque des revendications précédentes, dans lequel la matière pulvérulente à base desdites substances végétales et/ou substances alcaloïdes a une teneur en eau par unité de poids inférieure à 18%, et facultativement comprise entre 7% et 12%.

5. - Procédé de fabrication de substances végétales reconstituées et/ou de substances alcaloïdes reconstituées, selon l'une quelconque des revendications précédentes, dans lequel le gel humectant a une viscosité de préférence comprise entre 10000 et 500000 cP.

6. - Procédé de fabrication de substances végétales reconstituées et/ou de substances alcaloïdes reconstituées selon l'une quelconque des revendications précédentes, dans lequel le gel humectant comprend de l'eau et un pourcentage d'agents liants/épaississants compris entre 2% et 25%.

7. - Procédé de fabrication de substances végétales reconstituées et/ou de substances alcaloïdes reconstituées selon la revendication 6, dans lequel les agents liants/épaississants comprennent la carboxyméthylcellulose et/ou la farine de guar.

8. - Procédé de fabrication de substances végétales reconstituées et/ou de substances alcaloïdes reconstituées, selon l'une quelconque des revendications précédentes, dans lequel le mélange pâteux à base desdites substances végétales et/ou substances alcaloïdes a une teneur en eau par unité de poids comprise entre 10% et 40%.

9. - Procédé de fabrication de substances végétales reconstituées et/ou de substances alcaloïdes reconstituées, selon l'une quelconque des revendications précédentes, **caractérisé par le fait qu'**il comprend, préalablement à l'étape d'enroulement, également l'étape de découpe/égalisation des deux côtés de la feuille desdites substances végétales reconstituées et/ou substances alcaloïdes reconstituées (102), de façon à obtenir une feuille desdites substances végétales reconstituées et/ou substances alcaloïdes reconstituées (102) de largeur prédéterminée et sensiblement constante.

10. - Installation pour la production de substances végétales reconstituées et/ou de substances alcaloïdes reconstituées (1), comprenant : une ligne (2) pour la pulvérisation de la matière, qui est apte à produire et délivrer une matière pulvérulente avec une dimension de particule prédéterminée et comprenant des poudres desdites substances végétales et/ou substances alcaloïdes de préférence mélangées à des fibres végétales en poudre ; une machine de gélification (3), qui est apte à produire et délivrer un gel humectant à base aqueuse ayant une viscosité supérieure à 1000 cP ; une unité de mélange (4), qui est apte à mélanger la matière pulvérulente à base desdites substances végétales et/ou substances alcaloïdes provenant de ladite ligne de pulvérisation (2) avec le gel humectant provenant de ladite machine de gélification (3), de façon à produire et délivrer un mélange pâteux à base desdites substances végétales et/ou substances alcaloïdes, sensiblement solide ; une unité d'extrusion (5), qui est apte à extruder le mélange pâteux à base desdites substances végétales et/ou substances alcaloïdes provenant de ladite unité de mélange (4), de façon à produire et délivrer une section de pâte extrudée à base desdites substances végétales et/ou substances alcaloïdes ; une unité de séparation (6), qui est apte à couper en continu la section extrudée qui sort de ladite unité d'extrusion (5), de façon à produire et délivrer une succession de petits blocs/plaques de pâte à base desdites substances végétales et/ou substances alcaloïdes (100), lesdits petits blocs/plaques de pâte ayant un volume inférieur à 5 cm³; une unité de laminage (7), qui est apte à laminer les différents blocs/plaques de pâte à base desdites substances végétales et/ou substances alcaloïdes (100) provenant de ladite unité de séparation (6) de façon successive, de façon à délivrer une seule feuille de pâte à base desdites substances végétales et/ou substances alcaloïdes (101) ; et une ligne de séchage (8) qui est apte à sécher la feuille de pâte à base desdites substances végétales et/ou substances alcaloïdes (101) provenant de ladite unité de laminage (7), de façon à produire une feuille desdites substances végétales reconstituées et/ou substances alcaloïdes reconstituées (102) ; une machine d'enroulement (9), qui est positionnée en aval de la ligne de séchage (8), et qui est apte à enrouler la feuille desdites substances végétales reconstituées et/ou substances alcaloïdes reconstituées (102) qui sort de ladite ligne de séchage (8), de façon à délivrer une succession d'enroulements desdites substances végétales reconstituées et/ou substances alcaloïdes reconstituées (103) ;
**caractérisé par le fait que**
ladite machine d'enroulement (9) est apte à couper en continu la feuille desdites substances végétales reconstituées et/ou substances alcaloïdes reconstituées (102) qui sort de la ligne de séchage (8) parallèlement à sa direction d'avance, de façon à diviser la feuille en au moins deux bandes desdites substances végétales reconstituées et/ou substances alcaloïdes reconstituées (104) de largeur prédéterminée, puis à enrouler chaque bande desdites substances végétales reconstituées et/ou substances alcaloïdes reconstituées (104) séparément des autres.

11. - Installation pour la production de substances végétales reconstituées et/ou de substances alcaloïdes reconstituées, selon la revendication 10, dans laquelle la machine d'enroulement (9) comporte au moins un moyeu d'enroulement rotatif (91) sur lequel les différentes bandes desdites substances végétales reconstituées et/ou substances alcaloïdes reconstituées (104) sont simultanément et séparément enroulées en enroulements.
